Europäisches Patentamt

European Patent Office

Office européen des brevets

(11) Publication number: **0 501 125 A1**

# EUROPEAN PATENT APPLICATION

(21) Application number: **92100749.8**

(22) Date of filing: **17.01.92**

(51) Int. Cl.5: **B60R 22/36**

(30) Priority: **27.02.91 JP 9672/91 U**
**29.03.91 JP 19909/91 U**
**30.08.91 JP 69561/91 U**

(43) Date of publication of application:
**02.09.92 Bulletin 92/36**

(84) Designated Contracting States:
**DE FR GB IT**

(71) Applicant: **FUJI-AUTOLIB COMPANY, LIMITED**
**1461, Ebijima, Ryuyo-cho**
**Iwata-gun, Shizuoka-ken(JP)**

(72) Inventor: **Sugano, Shuichi, c/o Fuji-Autolib**
**Co, Ltd.**
**No 1461, Ebijima, Ryuyo-cho**
**Iwata-gun, Shizuoka Prefecture(JP)**

(74) Representative: **Schmitz, Hans-Werner,**
**Dipl.-Ing.**
**Hoefer, Schmitz, Weber,**
**Ludwig-Ganghofer-Strasse 20**
**W-8022 Grünwald bei München(DE)**

(54) Emergency locking retractor with auto locking mechanism.

(57) An emergency locking retractor includes a locking device (10,20,24,26,28,30) for locking a belt spool (12) when actuated, a webbing sensor (33) and vehicle sensor (35) for detecting an emergency condition, an emergency-lock actuator (34,42) for actuating the locking device in response to the webbing sensor (33) and/or vehicle sensor (35) detecting the emergency condition, and an auto-lock actuator (46,52,56,58,60) for actuating the locking device when a full length of the webbing (14) is unwound from the belt spool. The locking device has a cam wheel (30) rotatable with the belt spool (12) and formed with a plurality of ratchet teeth (30d) on an outer periphery thereof. The cam wheel (30) is prevented from rotation in a predetermined direction when the locking device is actuated. The auto-lock actuator has a tooth member (46) pivotally installed for engagement with one of the ratchet teeth (30d) of the cam wheel (30) in the event of actuation of the locking mechanism by the auto-lock actuator. The auto-lock actuator has a locating device (60) for preventing a tooth (46) in engagement with one of the ratchet teeth (30d) from jumping up therefrom and being erroneously disengaged from the ratchet teeth (30d) when the cam wheel (30) is caused to rotate at a high speed in response to rapid unwinding of the webbing (14) from the belt spool (12).

In one embodiment, the locating device is constituted by a leaf spring (60) having an angled end portion (60a) and a correspondingly angular cam surface (46a) at a pivotal end of the tooth (46).

FIG.1

## BACKGROUND OF THE INVENTION

### 1. Field of the Invention

The present invention relates in general to a seat belt retractor for vehicles such as automobiles and more particularly to an emergency locking retractor having an auto locking mechanism.

### 2. Description of the Prior Art

An emergency locking retractor having an auto locking mechanism is known as disclosed in Japanese Utility Model Publication No. 2-2264.

The emergency locking retractor has a locking means which, in the event of an emergency condition such as an accident or sudden stop of a vehicle, prevents extraction of the seat belt webbing from the retractor so that a driver or passenger will be safely fastened to a vehicular seat by a seat belt and will not be thrown out of the vehicle. The auto locking mechanism is partially common with the locking means and allows only retraction after the webbing is fully extracted and is used for fastening a child seat to a vehicular seat.

A problem of such a prior art retractor is that the auto locking mechanism requires a particular gearing which is complicated in structure, large-sized and expensive.

## SUMMARY OF THE INVENTION

In accordance with the present invention, there is provided a novel and improved emergency locking retractor which comprises a belt spool rotatable in a first direction to wind thereon a webbing and in a second direction to unwind therefrom the webbing, biasing means for biasing the belt spool in the first direction, locking means for preventing rotation of the belt spool in the second direction when actuated, first sensor means for detecting an emergency condition, first actuating means for actuating the locking means in response to detection of the emergency condition by the first sensor means, second sensor means for detecting unwinding of a full length of the webbing from the belt spool, second actuating means for actuating the locking means in response to detection of the unwinding of the full length of the webbing by the second sensor means, and the locking means having a cam wheel rotatable with the belt spool and formed with a plurality of ratchet teeth on an outer periphery thereof.

The cam wheel is prevented from rotation in a predetermined direction when the locking means is actuated.

The second sensor means has a pivotal member for rotation toward and away from the belt spool in response to a volumetric variation of the webbing around said belt spool, spring means for urging the pivotal member toward the belt spool, and a lever rotatable with the pivotal member.

The second actuating means has a tooth member pivotally supported and engageable with one of the ratchet teeth and connecting means for drivingly connecting the tooth member to the lever and thereby causing the tooth member to be driven by the lever to be engaged with one of the ratchet teeth when the webbing is fully unwound from the belt spool.

The tooth member is driven by the lever to be disengaged from one of the ratchet teeth when a predetermined amount of the webbing is wound on the belt spool.

The second actuating means further has locating means for preventing the tooth in engagement with one of the ratchet teeth from jumping up therefrom and being disengaged from the ratchet teeth when the cam wheel is caused to rotate at a high speed in response to rapid unwinding of the webbing from the belt spool.

The above structure is effective for solving the above noted problems inherent in the prior art device.

It is accordingly an object of the present invention to provide a novel and improved emergency locking retractor having an auto locking mechanism which is simple in structure and reliable in operation.

It is a further object of the present invention to provide a novel and improved emergency locking retractor of the above described character which is compact in size and economical in cost.

It is a further object of the present invention to provide a novel and improved emergency locking retractor of the above described character which can make the assembly work easier and reduce the assembling expense.

It is a further object of the present invention to provide a novel and improved emergency locking retractor of the above described character, the auto locking mechanism of which is readily applicable to a current emergency locking retractor.

## BRIEF DESCRIPTION OF THE DRAWINGS

Fig. 1 is an exploded view of an emergency locking retractor according to an embodiment of the present invention;

Fig. 2 is a perspective view of a cam wheel of the emergency locking retractor of Fig. 1 when taken from the other side thereof;

Fig. 3 is an enlarged side elevational view of an auto locking mechanism of the emergency locking retractor of Fig. 1;

Fig. 4 is an enlarged fragmentary perspective view of the auto locking mechanism of Fig. 3;

Figs. 5, 6 and 7A to 7C are side elevational views of the auto locking mechanism of Fig. 3, in its various operating positions;

Figs. 8 and 9 are views similar to Figs. 5 and 6 but show a modification of the present invention;

Fig. 10 is a view similar to Fig. 1 but shows an emergency locking retractor according to a further embodiment of the present invention;

Fig. 11 is an enlarged side elevational view of an auto locking mechanism of the emergency locking retractor of Fig. 10;

Fig. 12 is an enlarged perspective view of a tooth employed in the auto locking mechanism of Fig. 11;

Fig. 13 is an enlarged perspective view of a lever employed in the auto locking mechanism of Fig. 11;

Fig. 14 is a side elevational view of the auto locking mechanism of Fig. 11, with its tooth being in a locking position for preventing extraction of a webbing;

Fig. 15 is a view similar to Fig. 14 but shows the tooth in its unlocking position for allowing extraction of the webbing;

Fig. 16 is a view similar to Fig. 1 but shows a further embodiment of the present invention;

Fig. 17 is a side elevational view of an auto locking mechanism of the embodiment of Fig. 16;

Fig. 18 is a fragmentary sectional view of a variant of an auto locking mechanism of Fig. 16; and

Fig. 19 is an enlarged perspective view of a lever employed in the embodiment of Fig. 16.

## DETAILED DESCRIPTION OF THE PREFERRED EMBODIMENTS

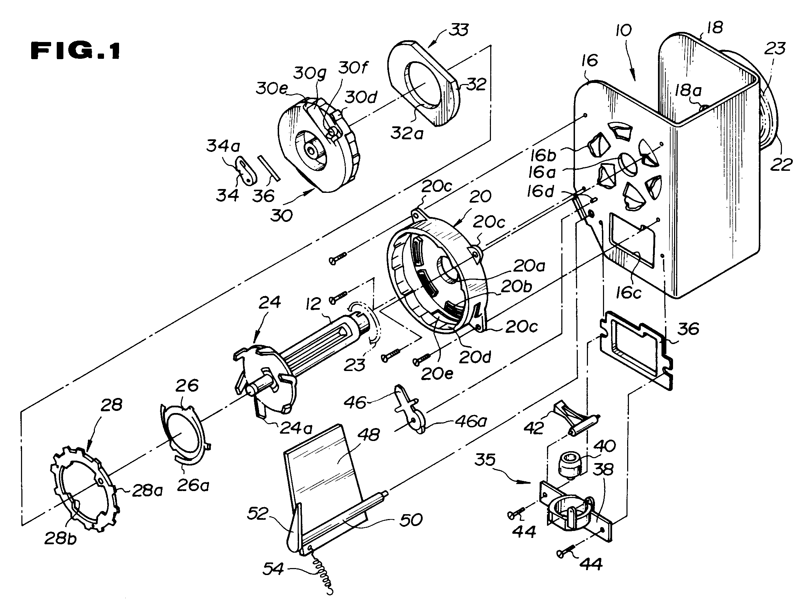

Referring first to Figs. 1 to 6 and 7A to 7C, an emergency locking retractor according to an embodiment of the present invention includes a retractor housing 10 and a belt spool 12 rotatably installed on the retractor housing 10. As will be described hereinlater, the belt spool 12 is biased in one rotational direction so as to wind thereon a seat belt webbing 14. The retractor housing 10 is of a U-like cross section and has a pair of parallel side walls 16 and 18 formed with openings 16a and 18a, respectively. The openings 16 and 18 are axially aligned to receive therein the belt spool 12. The side wall 16 is further formed with a plurality of locking teeth 16b arranged in a circular array concentric with the opening 16a and with a constant interval. More specifically, the locking teeth 16b are so shaped as to lie on a common cylindrical surface concentric with the opening 16a and located on the outer side of the side wall 16.

A drum-like lock casing 20 has an axial end opened and the other axial end closed and is secured at the other axial end to the side wall 16 of the retractor housing 10 on the outer side thereof. The lock casing 20 has at the other axial end an axial end wall formed with a concentric opening 20a and a plurality of slots 20b. The slots 20b are arranged in a circular array concentric with the opening 20a and with a constant interval. The lock casing 20 further has a plurality of radial flanges 20c at which it is bolted or otherwise secured to the side wall 16 of the retractor housing 10 in such a manner that the openings 16a and 20a are axially aligned with each other and that the locking teeth 16b protrude through the respective slots 20b inward of the lock casing 20. The lock casing 20 further has a plurality of ratchet teeth 20d on the inner circumferential surface thereof.

A spring casing 22 is secured to the side wall 18 of the retractor housing 10 on the outer side thereof and houses therein a spring 23 which is engaged with an end portion of the belt spool 12 for biasing the belt spool 12 in one rotational direction, i.e., for yieldingly urging the belt spool 12 to wind thereon the webbing 14.

A locking disk 24 is installed on the other end portion of the belt spool 12 for rotation with same and housed in the lock casing 20. The locking disk 24 has at the outer circumferential edge thereof a plurality of locking claws 24a lying on a common cylindrical surface and extending toward respective free ends thereof obliquely to the axis of the locking disk 24.

A washer-like thrust spring 26 having a plurality of axially protruding resilient arms 26a is interposed between the locking disk 24 and a locking wheel 28 for biasing them in the opposite directions.

The locking wheel 28 is in the form of a flat ring and has a plurality of outer locking teeth 28a on the outer peripheral edge and a plurality of inner locking teeth 28b on the inner peripheral edge. The outer locking teeth 28a are constantly engaged with the locking claws 24a of the locking disk 24 and selectively engageable with the locking teeth 16b in dependence upon the axial distance between the locking wheel 28 and the side wall 16 of the retractor housing 10.

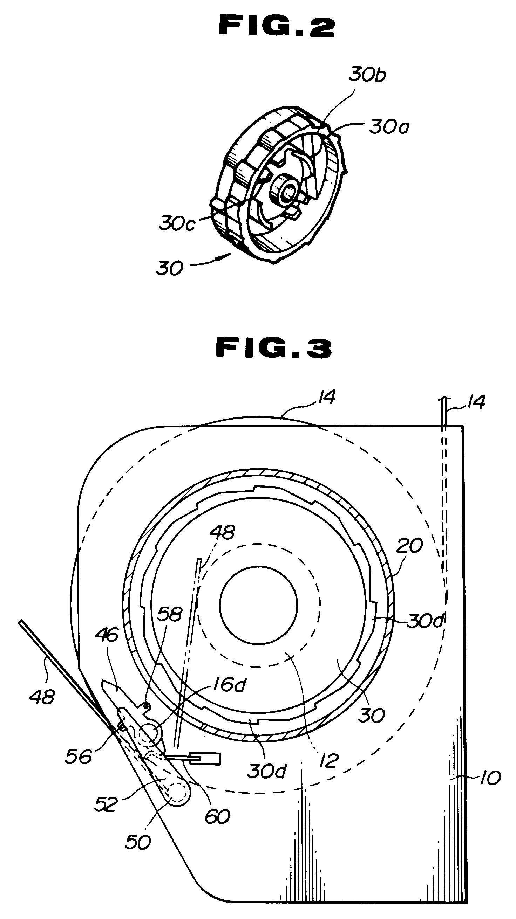

The locking wheel 28 is housed in a cam wheel 30 having concentric inner and outer hollow cylindrical walls 30a and 30b. As seen from Fig. 2, the inner cylindrical wall 30a is formed with a plurality of notches 30c which are engageable with the inner locking teeth 28b of the locking wheel 28 and which are axially slanted so that the locking wheel 28, when driven to rotate relative to the cam wheel 30, is caused to move toward the side wall 16 of the retractor housing 10, being guided by the notches 30c.

The cam wheel 30 further houses therein an inertia responsive flywheel 32 at a location between the inner and outer cylindrical walls 30a and 30b. The flywheel 32 is in the from of an ellipse-like plate and has a central opening 32a at which it is installed on the inner cylindrical wall 30a of the cam wheel 30. The flywheel 32 is rotatable with the cam wheel 30 when driven slowly, i.e., when driven at a speed lower than a predetermined value and rotatable relative to the same when driven rapidly by the effect of its inertia.

The cam wheel 30 has at one axially separated half of the outer periphery of the outer cylindrical wall 30b a plurality of ratchet teeth 30d and at the other half a recess 30e. The cam wheel 30 further has at the recess 30e a pivot pin 30f in parallel to the axis thereof. A webbing sensor-responsive pawl 34 is disposed within the recess 30e and pivotally supported on the pivot pin 30f. The webbing sensor-responsive pawl 34 is biased by a leaf spring 36 in the direction to be disengaged from the ratchet teeth 20d of the lock casing 20. The webbing sensor-responsive pawl 34 has at the free end thereof a projection 34a for contact with the flywheel 32 through an opening 30g formed in the recess 30e and under the bias of the leaf spring 36. The flywheel 32 is capable of partially protruding into the recess 30e through the opening 30g upon rotation of the flywheel 32 relative the cam wheel 30 for thereby causing the webbing sensor-responsive pawl 34 to be engaged with one of the ratchet teeth 20d of the lock casing 20 to prevent rotation of the cam wheel 30 relative to the lock casing 20.

In the foregoing, it is to be noted that a locking means for locking the belt spool 12 is constituted by the retractor housing 10, lock casing 20, locking disk 24, thrust washer 26, locking wheel 28 and cam wheel 30.

It is further to be noted that a webbing sensor 33 for detecting an emergency condition, i.e., an excessively high speed of extraction of the webbing 14 or an excessively high speed at which the webbing 14 is unwound from the belt spool 12 is constituted by the inertia-senstive flywheel 32.

It is further to be noted that an emergency-lock actuating means for actuating the locking means and thereby causing the same to lock the belt spool 12 in response to detection of an emergency condition by the webbing sensor 33 is constituted by the webbing sensor-responsive pawl 34.

A vehicle sensor 35 is mounted on the side wall 16 of the retractor housing 10 by means of a frame 36. The frame 36 surrounds an opening which coincides with an opening 16c formed in the side wall 16 of the retractor housing 10. The vehicle sensor 35 comprises a weight retainer 38 and an inertia-sensitive weight 40. A vehicle sensor-responsive pawl 42 is provided for actuating the locking means and thereby causing the same to lock the belt spool 12 in response to a vehicle emergency condition such as sudden stop detected by the vehicle sensor 35.

The weight retainer 38 is secured to the side wall 16 of the retractor housing 10 by way of the frame 36 and with screws 44. The inertia-sensitive weight 40 is installed on the weight retainer 38. The vehicle sensor-responsive pawl 42 is pivotally supported on the weight retainer 38 and held in contact with the inertia-sensitive weight 40. As is well known, the inertia-senstive weight 40 tilts in response to an excessively large moment of inertia or a moment of inertia larger than a predetermined value, i.e., in the event of an accident or sudden stop of a vehicle, for thereby moving the vehicle sensor-responsive pawl 40 upward into a position in which the free end of the vehicle sensor-responsive pawl 42 passes through an opening 20e formed in the circumferential wall of the lock casing 20 and engages one of the ratchet teeth 30c for thereby preventing rotation of the cam wheel 30 relative to the lock casing 20.

In the foregoing, it will be understood that the vehicle sensor 35 constitutes a sensor means for detecting an emergency condition such as an accident or sudden stop of a vehicle.

It will be further understood that the vehicle sensor-responsive pawl 42 also constitutes an emergency-lock actuating means for actuating the locking means and thereby causing the same to lock the belt spool 12.

The foregoing structure of the emergency locking retractor is substantially similar to that disclosed in U. S. Patent No. 4,560,115 issued on Dec. 24, 1985 and assigned to the same assignee of this application.

In accordance with the present invention, the emergency locking retractor is provided with a novel auto-lock actuating means which cooperates with an auto-lock sensor means and the aforementioned locking means to constitute a novel auto locking mechanism which allows only retraction of the webbing 14 after the webbing 14 is fully extracted and is used for fastening a child seat to a vehicular seat.

The auto locking mechanism includes a tooth 46, a pivotal plate 48, a pivotal shaft 50, a lever 52 and a coil spring 54.

The side wall 16 of the retractor housing 10 has secured thereto on the outer side thereof a pivot pin 16d which extends axially in parallel to the belt spool 12. The tooth 46 has a pivotal end portion at which it is pivotally supported on the pivot pin 16d and a free end portion which is capable of protruding through an opening 20e of the lock casing 20 into the inside of same for engagement with the ratchet teeth 30c of the cam wheel 30. The pivotal shaft 50 is rotatably supported on the side walls 16 and 18 of the retractor housing 10 in such a manner as to extend axially in parallel to the belt spool 12 and to have one end located outside the side wall 16 of the retractor housing 10 and adjacent the pivot pin 16d. The pivotal plate 48 is disposed between the side walls 16 and 18 of the retractor housing 10 and installed at an end thereof on the pivotal shaft 50 for rotation therewith. The spring 54 is connected at an end to the pivotal plate 48 and at the other end to the retractor housing 10 in such a manner as to bias the pivotal plate 48 in one rotational direction, i.e., toward the belt spool 12. The lever 52 is installed at an end on the above mentioned one end of the pivotal shaft 50 for rotation therewith.

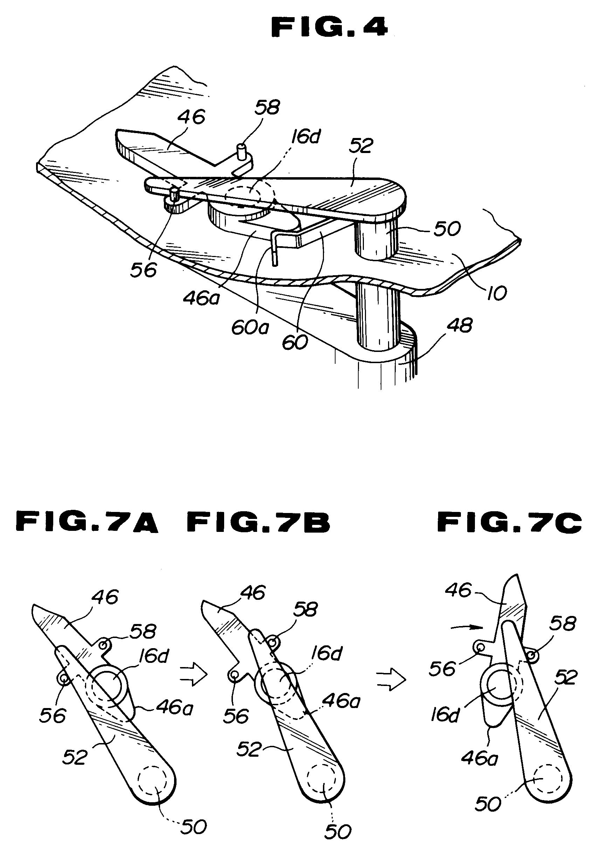

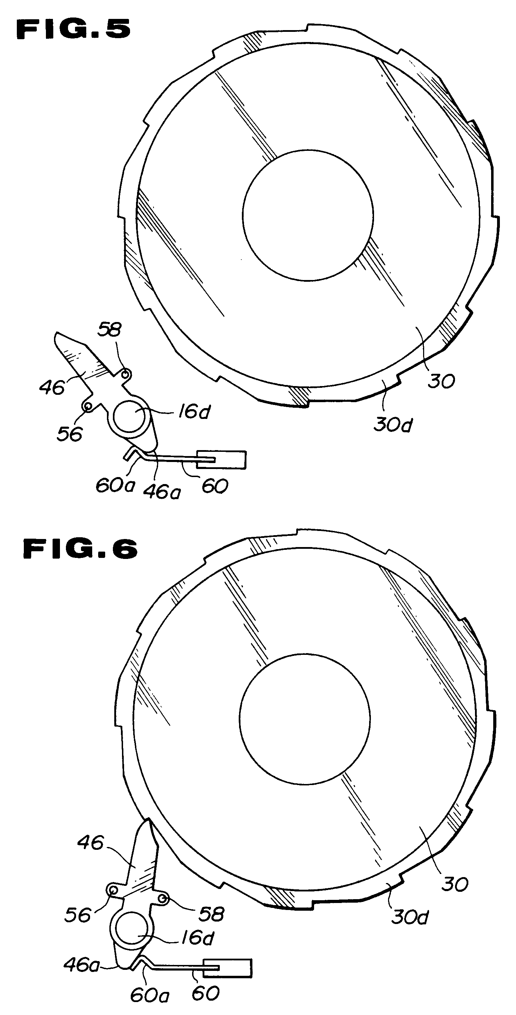

As best seen from Fig. 4, the lever 52 has a free end portion 52a disposed between a pair of stopper pins 56 and 58 secured to the tooth 46 in such a manner as to extend axially in parallel to the belt spool 12. The free end portion of the lever 52 is selectively engageable with one of the pins 56 and 58 for rotating the tooth 46 about the pivot pin 16d in a direction corresponding to the direction of rotation of the lever 52.

The tooth 46 has at the pivotal end thereof an angular cam surface 46a. A leaf spring 60 has an angled end portion 60a for contact with the cam surface 46a of the tooth 46 and is secured at the other end portion to the side wall 16 of the retractor housing 10. When the cam surface 46a of the tooth 46 is positioned on the right-hand side or inner side of the angled end portion 60a of the leaf spring 60 as shown in Fig. 5, the tooth 46 is held disengaged from the ratchet teeth 30c of the cam wheel 30. On the other hand, when the cam surface 46a is positioned on the left-hand side or outer side of the angled end portion 60a as shown in Fig. 6, the tooth 46 is held engaged with the ratchet teeth 30c.

In the foregoing, it is to be noted the pivotal plate 48, pivotal shaft 50 and spring 54 constitute the auto-lock sensor means.

It is further to be noted that the tooth 46, lever 52, stopper pins 56 and 58 and spring 60 constitute the auto-lock actuating means.

It is further to be noted that the pair of stopper pins 56 and 58 constitute a connecting means for drivingly connecting the lever 52 to the tooth 46.

The emergency locking retractor of this invention operates as follows.

When the auto locking mechanism is to be operated for fastening a child seat to a vehicular seat, the webbing 14 is slowly and fully extracted from the retractor so as not to operate the webbing sensor 33. As the diameter of the webbing 14 wound around the belt spool 12 decreases, the pivotal plate 48 is caused to rotate toward the belt spool 12 under the bias of the spring 54, i.e., the pivotal plate 48 is caused to rotate from the solid line position toward the two-dot chain line position in Fig. 3, causing the pivotal shaft 50 and the lever 52 to rotate correspondingly and thereby causing the free end portion of the lever 52 to abut upon the stopper pin 58 and drive the tooth 46 to rotate about the pivotal pin 16d in the clockwise direction in Fig. 3. The tooth 46 is thus caused to rotate from the position shown in Fig. 7A to the position shown in Fig. 7B and then to the position shown in Fig. 7C, causing the angled end portion 60a of the leaf spring 60 to be pushed down by the cam surface 46a of the tooth 46 for thereby causing the leaf spring 60 to resiliently flex downward. By this, the cam surface 46a of the tooth 46 is allowed to go over the apex of the angled end portion 60a and move from the inner side to the outer side of the angled end portion 60a to be held in contact with same, thus causing the tooth 46 to protrude through the opening 20e of the lock casing 20 into the inside of same and be engaged with one of the ratchet teeth 30c for thereby preventing rotation of the cam wheel 30 relative to the lock casing 20.

A child seat is installed on a vehicular seat, and the seat belt is passed around or through a predetermined attaching portion of the child seat. A tang of the seat belt is then connected to a corresponding buckle. The excess length of the webbing 14 is then retracted into the retractor under the bias of the spring 23 within the spring casing 22. In this instance, since the tooth 46 can go over the ratchet teeth 30d when the cam wheel 30 rotates in one direction, the belt spool 12 can rotate together with the cam wheel 30 in the corresponding direction to wind thereon the webbing 14. However, the tooth 46 is lockingly engaged with one of the ratchet teeth 30d to prevent rotation of the cam wheel 30 in the opposite direction, the belt spool 12 cannot rotate in the corresponding opposite direction to allow unwinding of the webbing 14 therefrom. Accordingly, it is impossible to extract the webbing 14 from the retractor after the excess length of the webbing 14 is retracted. Therefore, while retraction of the webbing 14 into the retractor is possible, extraction of the same is impossible, thus making it possible to fixedly hold the child seat on the vehicular seat. In this instance, even when an accident or sudden stop of the vehicle arises to put the webbing sensor 33 and the vehicle sensor 35 into operation, prevention of extraction of the webbing 14 is maintained since the tooth 46 and the ratchet teeth 30d are held engaged without any change.

When the child seat is to be removed, the tang of the seat belt is disconnected from the buckle to allow the webbing 14 to be wound on the belt spool 12. By this, the pivotal plate 48 is caused to rotate in the direction to go away from the belt spool 12, thus causing the free end portion of the lever 52 to abut upon the stopper pin 56 to rotate the tooth 46 about the pivotal pin 16d in the counterclockwise direction in Fig. 3 and thereby causing the cam surface 46a of the tooth 46 to go over the apex of the angled end portion 50a of the leaf spring 50 to move from the outer side to the inner side of the angled end portion 50a to be held in contact with same as shown in Fig. 5. By this, the tooth 46 is held disengaged from the ratchet teeth 30c of the cam wheel 30 and therefore the auto locking mechanism is put into an inoperative condition.

In usual use of the emergency locking retractor, i.e., when the emergency locking retractor is used for safely fastening a driver or a passenger to a vehicular seat, the webbing 14 is not extracted fully but partially from the retractor and therefore not extracted to such an extent as to cause the tooth 46 to be engaged with the ratchet teeth 30d of the cam wheel 30, i.e., not extracted such an extent as to put the auto locking mechanism into operation. In wearing of the seat belt, the webbing 14 thus can be freely extracted and retracted to attain the comfort of the driver or passenger or take up the slack of the seat belt.

When the webbing 14 is extracted rapidly from the retractor, the flywheel 32 cannot rotate together with the cam wheel 30 but is caused to rotate relative to the same due to its inertia, thus causing the webbing sensor-responsive pawl 34 to engage one of the ratchet teeth 20d formed in the inner circumferential surface of the lock casing 20 to prevent rotation of the cam wheel 30 in a predetermined direction relative to the lock casing 20.

In the event of an accident or sudden stop of the vehicle, the inertia-sensitive weight 40 tilts to cause the vehicle sensor pawl 42 to rotate and engage one of the ratchet teeth 30c on the outer periphery of of the outer cylindrical wall 30b of the cam wheel 30 for thereby preventing rotation of the cam wheel 30 in a predetermined direction. On the other hand, a load is applied from a driver or passenger to the webbing 14 due to the inertia of the driver or passenger, thus urging the webbing 14 to be extracted rapidly from the retractor. By this, the webbing sensor-responsive pawl 34 is engaged with one of the ratchet teeth 20d of the lock casing 20 to prevent rotation of the cam wheel 30 in a predetermined direction.

In this instance, while rotation of the cam wheel 30 in the above-mentioned predetermined direction is prevented, the locking disk 24 is still rotatable together with the belt spool 12. Since a load is applied from a passenger to the webbing 14 due to the inertia of the passenger, the locking disk 24 is caused to rotate in the direction to allow extraction of the webbing 14, thus causing relative rotation between the locking disk 24 and the cam wheel 30. By this, the inner locking teeth 28b and the outer locking teeth 28a of the locking wheel 28 are caused to slide on the notches 30b of the cam wheel 30 and on the locking claws 24a of the locking disk 24, respectively. The locking wheel 28 are thus caused to move toward the retractor housing 10 against the bias of the thrust spring 26 and eventually causes the locking claws 24a to be engaged therethrough with the locking teeth 16b of the side wall 16, thus preventing rotation of the belt spool 12 relative to the lock casing 20 and therefore preventing extraction of the webbing 14.

In the foregoing, it will be understood that when the tooth 46 is in its locking position for engagement with one of the ratchet teeth 30d the leaf spring 60 can assuredly hold the tooth 46 in its locking position, that is, even when rapid retraction of the webbing 14 causes the cam wheel 30 to rotate at a high speed, the tooth 46 is assuredly prevented from jumping up for disengagement from the ratchet teeth 30d.

The leaf spring 60 with such an angled end portion 60a and the correspondingly angular cam surface 46a of the tooth thus constitute a location means for preventing the tooth 46 in engagement with one of the ratchet teeth 30d from jumping up therefrom and being disengaged from the ratchet teeth 30d when the cam wheel 30 is caused to rotate at a high speed in response to rapid unwinding of the webbing 14 from the belt spool 12.

It will be further understood that the angled end portion 60a of the leaf spring 60 and the cam surface 46a of the tooth 46 are further effective for assuredly holding the tooth 46 in its unlocking position.

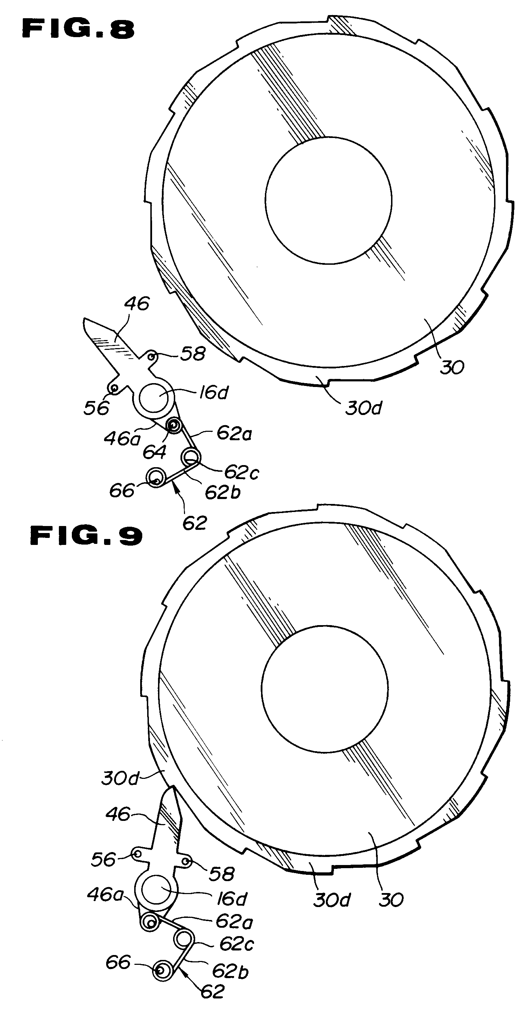

Figs. 8 and 9 show a modification in which a coiled torsion spring 62 is employed in place of the leaf spring 60. The coiled torsion spring 62 has an angled shape and includes a pair of arms 62a and 62b and a coiled portion 62c between the arms 62a and 62c. The arms 62a and 62b have circularly bent free ends which are relatively rotatably supported on pins 64 and 66 secured to the pivotal end of the tooth 46 and the side wall 16, respectively. Except for the above, this embodiment is substantially similar to the previous embodiment of Figs. 1 to 6 and 7A to 7C and can produce substantially the same effect.

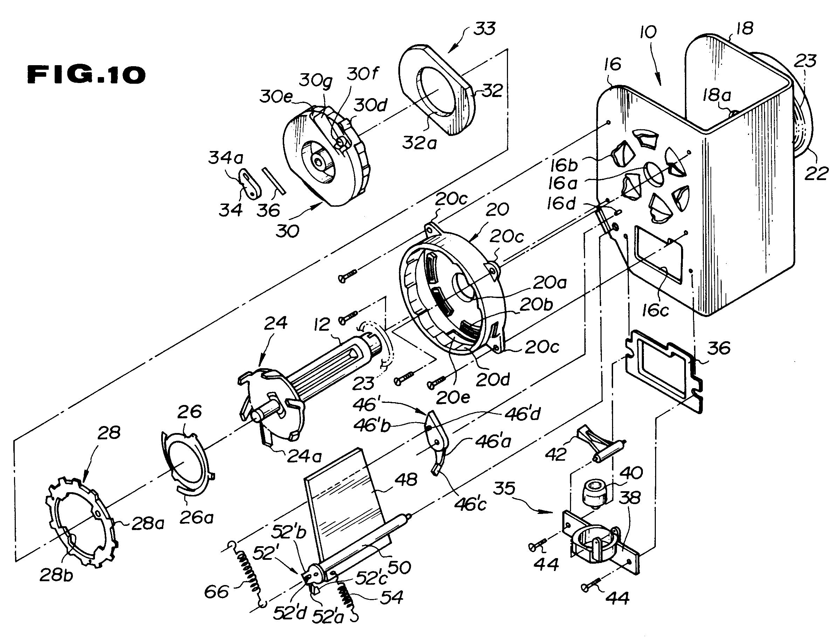

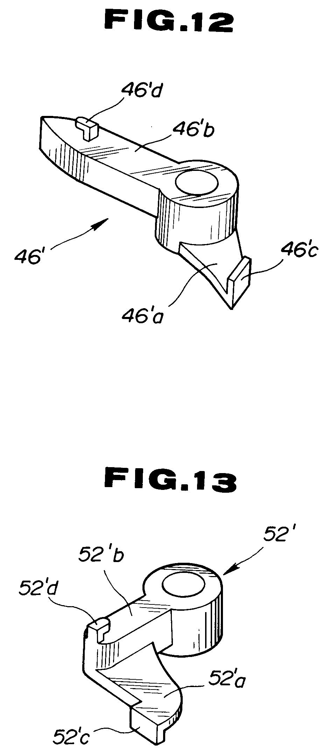

Referring to Figs. 10 to 15, in which like parts and portions to those of the previous embodiment of 1 to 6 and 7A to 7C are designated by like reference characters, an emergency locking retractor according to a further embodiment will be described. In this embodiment, a tooth 46' for the auto locking mechanism has at the pivotal end portion an integral arm 46'a elongated at an angle with a main tooth portion 46'b. The arm 46'a has at a free end thereof an abutment 46'c. The tooth 46' has a hooked pin 46'c at a free end of the main tooth portion 46'b.

A lever 52' for the auto-lock actuating means has at a free end an integral arm 52'a elongated at an angle with a main lever portion 52'b. The arm 52'a has at a free end an abutment 52'c. The lever 52' has a hooked pin 52'd at a free end of the main lever portion 52'b. The hooked pins 46'd and 52'd are resiliently interconnected by a tension spring 66 and biased thereby toward each other.

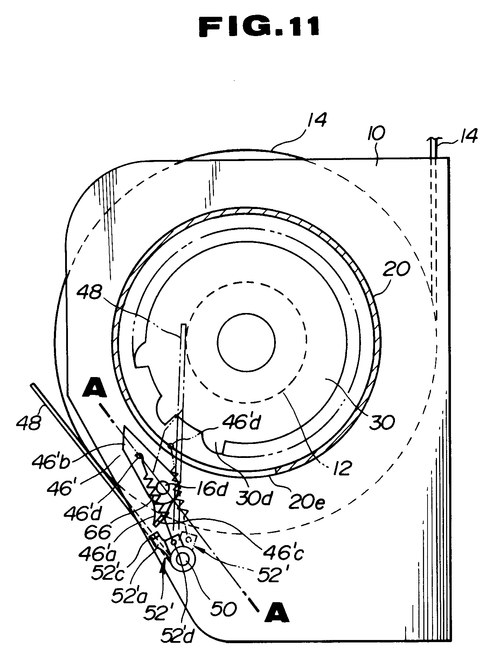

As seen from Fig. 11, when the tension spring 66 is located on a right-hand side of a transition position A-A represented by a line extending through the axes of the hooked pin 46'd and the pivot pin 16d, the tooth 46' is urged for engagement with the ratchet teeth 30d. On the other hand, when the tension spring 66 is located on the left-hand side of the transition position A-A, the tooth 46' is urged for disengagement from the ratchet teeth 30d.

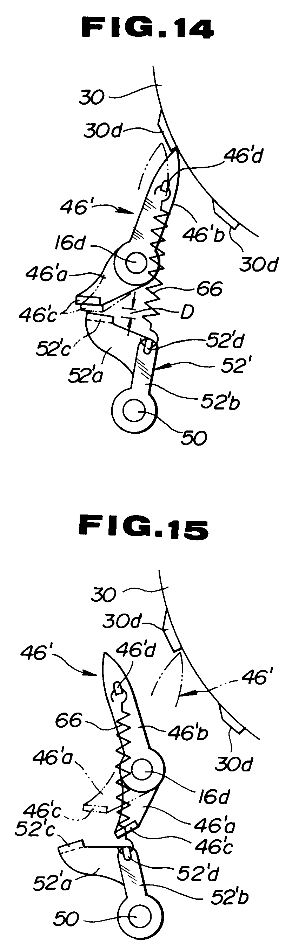

As shown in Fig. 14, the abutment 46'c of the tooth 46' and the abutment 52'c of the lever 52' are positioned adjacent to each other when the tooth 46' is in engagement with one of the ratchet teeth 30d. In this instance, a space "D" is provided between the abutments 46'c and 52'c to allow the free end of the tooth 46' to go over the ratchet teeth 30d when the cam wheel 30 is rotated in a predetermined direction. However, in the event of jumping up of the tooth 36' due to high-speed rotation of the cam wheel 30, the abutments 46'c and 52'c are caused to abut upon each other to prevent erroneous movement of the tooth 46' into its unlocking position, i.e., into a position where it is held disengaged from the ratchet teeth 30d.

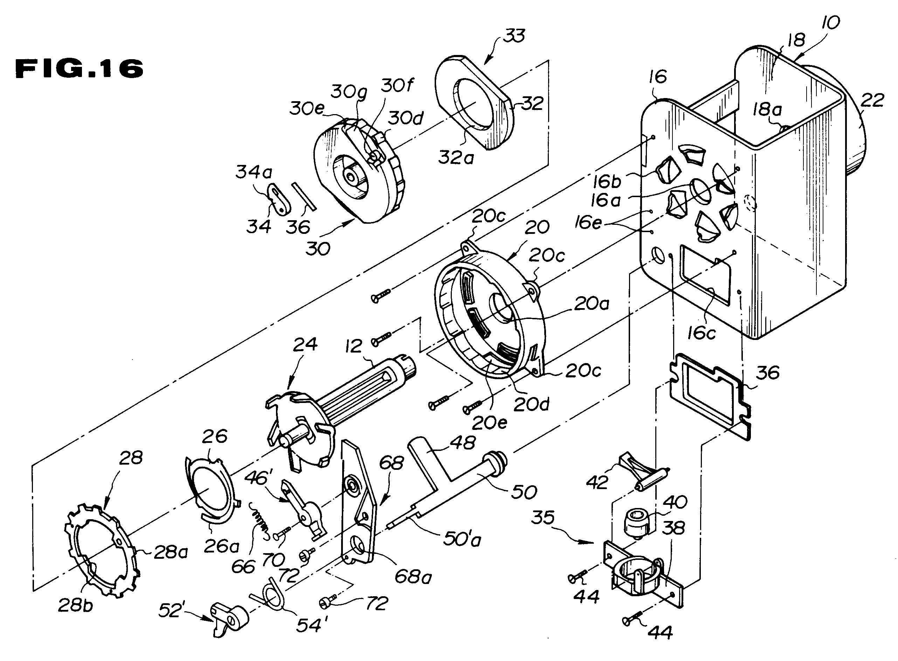

When the tooth 46' is in its unlocking position, the abutments 46'c and 52'c are positioned away from each other as shown in Fig. 15 and assuredly prevented from abutment upon each other even upon rotation of the tooth 46'.

In this embodiment, it will be understood that the spring 66 constitutes the connecting means for drivingly connecting the lever 52' to the tooth 46'.

It will be further understood that the arms 46'a and 52'a and abutments 46'c and 52'c constitute the location means for preventing the tooth 46' in its locking position from jumping up into an unlocking position when the cam wheel 30 is caused to rotate at a high speed in response to rapid unwinding of the webbing 14 from the belt spool 12, particularly when the spring 66 is positioned adjacent to the transition position A-A.

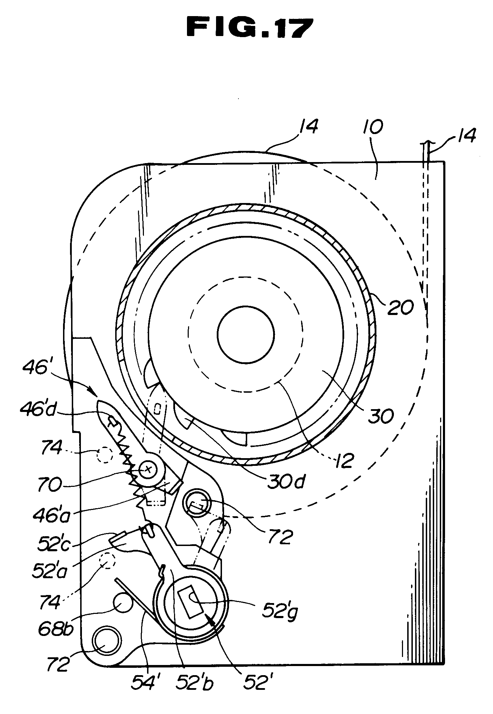

Referring to Figs. 16 to 19 in which like or corresponding parts to those of the previous embodiments of Figs. 1 to 15 are designated by like reference characters, an emergency locking retractor according to a further embodiment will be described.

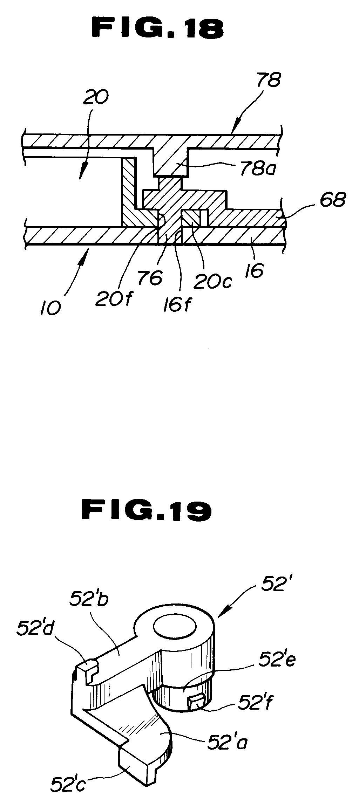

In this embodiment, the tooth 46' and the lever 52' are installed on a base plate 68 to constitute an assembled unit. More specifically, the tooth 46' is pivotally installed on the base plate 68 by means of a screw 70. The lever 52' has a stepped pivot end portion 52'e fitted in an opening 68a of the base plate 68 and prevented from being slipped off therefrom by means of a stopper such as a projection 52'f as shown in Fig. 19. The spring 54' has a pair of arms respectively engaged with the main lever portion 52'b and a pin 68b of the base plate 68 so as to bias the lever 52' and therefore the pivotal plate 48 in one rotational direction, i.e., toward the belt spool 12. The hooked pins 46'd and 52'd are interconnected by the spring 66.

The assembled unit is installed on the retractor housing 10 by attaching the base plate 68 to the side wall 16 with screws 72. In this instance, the base plate 68 has integral location pins 74 fitted in corresponding openings 16e formed in the side wall 16. By this, the base plate 68 is located relative to the side wall 16. The pivotal shaft 50' has an end portion 50'a of a rectangular cross section. The end portion 50'a is inserted into a correspondingly shaped opening 52'g of the lever 52' so that the pivotal shaft 50' and the lever 52' are rotatable together.

As shown in Fig. 18, the base plate 68 may be formed with a projection 76 fitted in an opening 20f of the lock casing flange 20c and its corresponding opening 16f of the side wall 16 and secured to the side wall 16 by means of a cover 78 which has a projection 78a pressing the base plate 68 and the flange 20c against the side wall 16. The cover 72 is bolted to or otherwise secured to the side wall 12 of the retractor housing 10 to cover the lock casing 20, cam wheel 30, etc. to prevent ingress of dust, mad, water, etc. thereto.

In the foregoing, it will be understood that such an assembled unit of the tooth 46', lever 52', etc. can make the assembly work easier and therefor can reduce the assembling expense.

Except for the above, this embodiment is substantially similar to the previous embodiment of Figs. 10 to 15 and can produce substantially the same effect.

## Claims

1. An emergency locking retractor comprising:
   a belt spool rotatable in a first direction to wind thereon a webbing and in a second direction to unwind therefrom the webbing;
   biasing means for biasing said belt spool in said first direction;

locking means for preventing rotation of said belt spool in said second direction when actuated;

first sensor means for detecting an emergency condition;

first actuating means for actuating said locking means in response to said first sensor means detecting the emergency condition;

second sensor means for detecting unwinding of a full length of the webbing from said belt spool;

second actuating means for actuating said locking means in response to said second sensor means detecting unwinding of the full length of the webbing from said belt spool;

said locking means having a cam wheel rotatable with said belt spool and formed with a plurality of ratchet teeth on an outer periphery thereof, said cam wheel being prevented from rotation in a predetermined direction when said locking means is actuated;

said second sensor means having a pivotal member for rotation toward and away from said belt spool in response to a volumetric variation of the webbing around said belt spool, spring means for urging said pivotal member toward said belt spool and a lever rotatable with said pivotal member;

said second actuating means having a tooth member pivotally supported and engageable with one of said ratchet teeth and connecting means for drivingly connecting said tooth member to said lever and thereby causing said tooth member to be driven by said lever to be engaged with one of said ratchet teeth when the webbing is fully unwound from said belt spool, said tooth member being driven by said lever to be disengaged from one of said ratchet teeth when a predetermined amount of the webbing is wound on said belt spool;

said second actuating means further having locating means for preventing said tooth in engagement with one of said ratchet teeth from jumping up therefrom and being disengaged from said ratchet teeth when said cam wheel is caused to rotate at a high speed in response to rapid unwinding of the webbing from said belt spool.

2. An emergency locking retractor according to claim 1, wherein said locating means comprises a leaf spring having an angled end portion, said tooth member having at a pivotal end an angular cam surface, said tooth member being held in engagement with one of said ratchet teeth when said cam surface being in contact with one side of said angled end portion and held out of engagement with one of said ratchet teeth when said cam surface being in contact with the other side of said angled end portion.

3. An emergency locking retractor according to claim 2, wherein said connecting means comprises a pair of stopper pins secured to a free end of said tooth member, a free end of said lever being disposed between said stopper pins and engageable with same.

4. An emergency locking retractor according to claim 1, wherein said locating means comprises a torsion spring having a coiled portion and a pair of arms, one of which arms is engaged at its terminal end with a pivotal end portion of said tooth member and the other is stationarily held at its terminal end.

5. An emergency locking retractor according to claim 1, wherein said tooth member has at a pivotal end thereof a first abutment, said lever having at a free end thereof a second abutment, said first and second abutments being abuttingly engageable to prevent said tooth member in engagement with one of said ratchet teeth from jumping up therefrom, said first and second abutments constituting said locating means.

6. An emergency locking retractor according to claim 5, wherein when said tooth member is in engagement with one of said ratchet teeth, a space is provided between said first and second abutments to allow a free end of said tooth member to go over said ratchet teeth when said cam wheel is rotation in a direction opposite to said predetermined direction.

7. An emergency locking retractor according to claim 6, wherein said connecting means comprises a tension spring having opposite ends engaged with a free end of said tooth and a free end of said lever, respectively, said tension spring being so arranged as to urge said tooth member for engagement with one of said ratchet teeth when said lever is positioned nearer to said belt spool than a predetermined transition position and for disengagement from said ratchet teeth when said lever is positioned remoter from said belt spool than said transition position.

8. An emergency locking retractor according to claim 1, further comprising a retractor housing on which said belt spool is rotatably installed, said second actuating means further comprising a base plate which is attached to said retractor housing, wherein said tooth member, said biasing means, said lever and said connecting means are installed on said base plate to constitute an assembled unit for attachment to said retractor housing.

9. An emergency locking retractor according to claim 8, wherein said lever has a stepped pivotal end portion fitted in a corresponding opening of said base plate and stopper means for preventing said pivotal end portion from slipping off from said opening of said base plate, said second actuating means further comprising a pivotal shaft on which said pivotal member is installed, said pivotal shaft having an end portion detachably fitted in a correspondingly shaped opening of said pivotal end portion of said lever for rotation therewith.

10. An emergency locking retractor according to claim 9, wherein said biasing means comprises a coiled torsion spring placed around a pivotal portion of said lever and having opposite ends engaged with said lever and said base plate, respectively.

11. An emergency locking retractor according to claim 10, wherein said connecting means comprises a tension spring having opposite ends engaged with a free end of said tooth and a free end of said lever, respectively, said tension spring being so arranged as to urge said tooth member for engagement with one of said ratchet teeth when said lever is positioned nearer to said belt spool than a predetermined transition position and for disengagement from said ratchet teeth when said lever is positioned remoter from said belt spool than said predetermined position.

12. An emergency locking retractor according to claim 11, further comprising a cover for covering said locking means, said sensor means and said first and second actuating means, said base plate being pressed against said retractor housing and thereby attached to same by means of said cover.

13. An emergency locking retractor according to claim 1, wherein said first sensor means comprises a webbing sensor for detecting a speed at which the webbing is unwound from said belt spool.

14. An emergency locking retractor according to claim 13, wherein said first actuating means comprises a pawl which is engaged with one of said ratchet teeth in response to the speed detected by said webbing sensor being higher than a predetermined value.

15. An emergency locking retractor according to claim 1, wherein said first sensor means further comprises a vehicle sensor for detecting a moment of inertia.

16. An emergency locking retractor according to claim 15, wherein said first actuating means further comprises a pawl which is engaged with one of said ratchet teeth in response to the moment of inertia detected by said vehicle sensor being higher than a predetermined value.

17. An emergency locking retractor comprising:

a retractor housing of a U-like cross section and having a pair of parallel side walls;

a belt spool installed on said side walls and rotatable in a first direction to wind thereon a webbing and in a second direction to unwind therefrom the webbing;

biasing means for biasing said belt spool in said first direction;

locking means for preventing rotation of said belt spool in said second direction when actuated;

first sensor means for detecting an emergency condition;

emergency-lock actuating means for actuating said locking means in response to said first sensor means detecting the emergency condition;

second sensor means for detecting unwinding of a full length of the webbing from said belt spool;

auto-lock actuating means for actuating said locking means in response to said second sensor detecting unwinding of a full length of the webbing from said belt spool;

said locking means having a cam wheel rotatable with said belt spool and formed with a plurality of ratchet teeth on an outer periphery thereof, said cam wheel being prevented from rotation in a predetermined direction when said locking means is actuated;

said second sensor means having a pivotal member installed on said side walls for rotation toward and away from said belt spool in response to a volumetric variation of the webbing around said belt spool, spring means for biasing said pivotal member toward said belt spool, and a lever rotatable with said pivotal member;

said auto-lock actuating means having a tooth member pivotally installed on one of said side walls and engageable with one of said ratchet teeth and connecting means for drivingly connecting said tooth member to said lever and thereby causing said tooth member to be driven by said lever to be engaged with one of said ratchet teeth when the webbing is fully unwound from said belt spool, said tooth member being driven by said lever to be disengaged from one of said ratchet teeth when a predetermined amount of the webbing is wound on said belt spool;

said auto-lock actuating means further having locating means for preventing said tooth in engagement with one of said ratchet teeth from jumping up therefrom and being disengaged from said ratchet teeth when said cam wheel is caused to rotate at a high speed in response to rapid unwinding of the webbing from said belt spool.

# FIG.1

# FIG.2

30b

30a

30c

30

# FIG.3

14

14

48

20

58

30d

46

48

16d

30

56

52

30d

12

30d

50

60

10

# FIG.4

# FIG.7A  FIG.7B    FIG.7C

## FIG.5

## FIG.6

**FIG.8**

**FIG.9**

**FIG.10**

EP 0 501 125 A1

# FIG.11

# FIG.12

*46'd*

*46'b*

*46'*

*46'c*

*46'a*

# FIG.13

*52'*

*52'b*

*52'd*

*52'a*

*52'c*

# FIG.14

# FIG.15

FIG.16

# FIG.17

# FIG. 18

# FIG. 19

| | **EINSCHLÄGIGE DOKUMENTE** | | EP 92100749.8 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
| D,A | US - A - 4 560 115<br>(TOYAMA et al.)<br> * Totality *<br><br>-- | 1,2,<br>13,14,<br>15,16,<br>17 | B 60 R 22/36 |
| A | US - A - 3 288 254<br>(REPLOGLE)<br> * Fig. 4,8-10; column 6,<br> lines 21-64 *<br>-- | 1,17 | |
| A | US - A - 3 289 970<br>(BOARD et al.)<br> * Totality *<br>---- | 1,17 | |
| | | | **RECHERCHIERTE SACHGEBIETE (Int. Cl.⁵)**<br><br>B 60 R |

Der vorliegende Recherchenbericht wurde für alle Patentansprüche erstellt.

| Recherchenort | Abschlußdatum der Recherche | Prüfer |
|---|---|---|
| VIENNA | 11-06-1992 | SCHMICKL |

KATEGORIE DER GENANNTEN DOKUMENTEN
X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, überein-
    stimmendes Dokument

EPA Form 1503 03 82